# EUROPÄISCHE PATENTSCHRIFT

(11) **EP 1 465 355 B1**
(45) Veröffentlichungstag und Bekanntmachung des Hinweises auf die Patenterteilung: **04.07.2007**
(21) Anmeldenummer: 04004876.1
(22) Anmeldetag: 02.03.2004
(51) Int. Cl.: H04B 1/713

(54) **Frequenzkanalselektion in einem ein Frequenzsprungverfahren verwendenden Datenübertragungsverfahren**
Frequency channel selection in a data transmission method using a frequency hoppy method.
Sélection de canal fréquentiel dans une méthode de transmission de données utilisant le procédé de saut de fréquence.

(30) Priorität: 31.03.2003 DE 10314553
(43) Veröffentlichungstag der Anmeldung: 06.10.2004
(73) Patentinhaber: Infineon Technologies AG, 81669 München (DE)
(72) Erfinder: Gersemsky, Frank, 44789 Bochum (DE); Schmandt, Bernd, 42329 Wuppertal (DE)
(74) Vertreter: Graf Lambsdorff, Matthias

(56) Entgegenhaltungen:
- EP-A- 1 220 466
- WO-A-99/09671
- US-B1- 6 480 721

## Beschreibung

Die vorliegende Erfindung betrifft ein Verfahren zur Selektion von Frequenzkanälen in einem ein Frequenzsprungverfahren verwendenden Datenübertragungsverfahren nach dem Oberbegriff des Patentanspruchs 1.

Derartige Datenübertragungsverfahren kommen immer dann zur Anwendung, wenn Daten über kurze Distanzen über Funk ausgetauscht werden sollen, also beispielsweise beim Datenaustausch zwischen dem Basisteil und dem Mobilteil eines schnurlosen Telefons. Andere Beispiele betreffen den Datenaustausch zwischen einem PC und Peripheriegeräten, zwischen dem Gamepad einer Spielekonsole und der zugehörigen Feststation, etc.

Für digitale schnurlose Kommunikationssysteme wie z.B. WDCT, Bluetooth, HomeRF sind verschiedene lizenzfreie Frequenzbereiche reserviert, insbesondere die sogenannten ISM-Frequenzbereiche (Industrial Scientific and Medical), z.B. bei 2,4 GHz. Eine Datenübertragung von der Basisstation zu den Mobilstationen wird "down-link" genannt. Der umgekehrte Fall der Datenübertragung von den Mobilstationen zur Basisstation wird als "up-link" bezeichnet. Üblicherweise werden Datenbursts zwischen den Stationen entsprechend einem Zeitschlitzverfahren bzw. TDMA-Verfahren (Time Division Multiple Access) ausgetauscht.

Für die Nutzung der ISM-Frequenzbänder hat die zuständige Normungsbehörde, die Federal Communication Commission (FCC), Regel aufgestellt, in welcher Weise der Datenaustausch zu erfolgen hat. Eine dieser Regeln besagt, dass die drahtlose Datenübertragung entsprechend einem Frequenzsprungverfahren (Frequency Hopping Spread Spectrum) zu erfolgen hat. Außerdem wird festgelegt, wie viele Frequenzwechsel innerhalb bestimmter Zeitspannen durchgeführt werden müssen. Das zur Verfügung stehende Frequenzband wird in verschiedene Teilbänder oder Frequenzkanäle aufgeteilt. Während einer Verbindung springen die Transceiver der Teilnehmer nach einem pseudo-zufälligen Muster von einem Kanal zum anderen.

Bei dem Bluetooth-Verfahren wird ein Frequenzsprungverfahren und ein Zeitduplexverfahren eingesetzt. Der Kanal ist in Zeitschlitze mit einer Länge von jeweils 625 µs aufgeteilt, wobei jedem einzelnen Slot eine eigene Sprungfrequenz zugeordnet wird. In jedem Zeitschlitz kann ein Paket übertragen werden. Aufeinander folgende Zeitschlitze werden abwechselnd zum Senden und Empfangen benutzt (Zeitduplex, TDD).

Die Übertragungsqualität der beschriebenen Datenübertragungssysteme wird maßgeblich dadurch beeinträchtigt, dass das ISM-Frequenzband für jedermann offen ist, so dass die in diesem Frequenzbereich arbeitenden Funksysteme mit unvorhersehbaren Störquellen wie WLAN-Sendeeinrichtungen, Mikrowellenherden, Baby-Phones, Garagentor-Öffnern und anderen Schnurlos-Telefonen rechnen müssen. Diese Störquellen haben zumeist die Eigenschaft, dass sie einen Teil des ISM-Frequenzbandes statisch belegen (z.B. WLAN). Aus diesem Grund haben nicht alle Kanäle im Frequenzband die gleiche Übertragungsqualität. Ein Verfahren, welches eine feste Sprungsequenz benutzt, stört daher andere Systeme und wird auch in seiner Übertragung auf den gestörten Kanälen beeinträchtigt. Es ist daher grundsätzlich sinnvoll, ein adaptives Schema zu verwenden, welches danach trachtet, einen von Störquellen unbenutzten Teil des verfügbaren Frequenzspektrums zu suchen.

Bislang wurde bei Übertragungssystemen, die auf einem Frequenzsprungverfahren beruhen, eine festgelegte Sprungsequenz verwendet. Fehler in der Übertragung wurden entweder in Kauf genommen oder durch wiederholtes Senden der Daten (nicht jedoch im Falle von Sprachdaten) reduziert. Mit diesen Maßnahmen wird keine Rücksicht auf das störende System genommen, dessen Übertragung durch die Kollision ebenfalls beeinträchtigt wird. In anderen aus dem Stand der Technik bekannten Verfahren werden gestörte Kanäle nach einer festgelegten Zeit wieder in die Sprungsequenz aufgenommen, ohne zu prüfen, ob die Störung auf diesen Kanälen noch besteht. Falls die Kanäle noch immer gestört sind, werden sie dann wieder aus der Sprungsequenz entfernt. Dies bedingt jedoch erhöhten Kommunikationsaufwand, da sowohl das Wiederaufnehmen der Frequenzen in die Sprungsequenz als auch das Entfernen der Frequenzen innerhalb des gesamten Systems kommuniziert werden muss. Zusätzlich tritt während dieser Zeit eine Beeinträchtigung des störenden Systems auf.

Die Druckschrift WO 99/09671 offenbart ein Verfahren zur Mobilfunkübertragung, bei welchem eine Zufallssequenz an Trägerfrequenzen erzeugt wird und erfasst wird, auf welcher der Trägerfrequenzen eine Störung vorliegt. Eine Trägerfrequenz, die als gestört erfasst wurde, wird gesperrt und durch eine andere Trägerfrequenz ersetzt, die als nicht gestört erfasst wurde. Es wird ferner beschrieben, dass Störungen durch das Auftreten von CRC-Fehlern oder Burst-Verlusten erfasst werden können. Es wird außerdem beschrieben, dass eine gesperrte Trägerfrequenz wieder freigegeben werden kann, wenn eine erneute Erfassung ergibt, dass die gesperrte Trägerfrequenz nunmehr nicht mehr gestört ist.

EP 0 599 515 A offenbart einen Bitfehlerraten-Monitor, der die Übertragungsfehler überwacht, um festzustellen, ob eine Verbindung aufgrund einer erhöhten Bitfehlerrate beendet werden soll.

Es ist demgemäß Aufgabe der vorliegenden Erfindung, bei einem ein Frequenzsprungverfahren verwendenden Datenübertragungsverfahren die gegenseitige Beeinträchtigung der Übertragungsqualität zwischen dem eigenen System und fremden Störsystemen unter verringertem Kommunikationsaufwand zu reduzieren.

Diese Aufgabe wird durch die kennzeichnenden Merkmale des Patentanspruchs 1 gelöst. Vorteilhafte Weiterbildungen und Ausgestaltungen sind in den Unteransprüchen angegeben.

Bei dem erfindungsgemäßen Verfahren wird eine Selektion von Frequenzkanälen in einem ein Frequenzsprungverfahren verwendenden Datenübertragungsverfahren durchgeführt. Das Verfahren weist zwei Verfahrensschritte auf. In einem ersten Verfahrensschritt wird die Störung eines Frequenzkanals festgestellt und der Frequenzkanal wird aus der Sprungsequenz eliminiert und in einem zweiten Verfahrensschritt wird dafür gesorgt, dass der eliminierte Frequenzkanal wieder eingefügt wird, wenn der Störungszustand entfallen ist.

Insbesondere wird in einem Verfahrensschritt a. eine Störung eines Frequenzkanals durch Detektieren mehrfacher fehlerhafter Übertragungen in dem Frequenzkanal festgestellt und der Kanal anschließend aus der Frequenzsprung-Sequenz eliminiert.

In einem Verfahrensschritt b. wird die Signalstärke von Fremdsignalen innerhalb des Frequenzbereichs eines eliminierten gestörten Frequenzkanals gemessen und der Frequenzkanal in die Frequenzsprung-Sequenz wieder eingefügt, sobald die Signalstärke einen vorgegebenen Schwellwert unterschreitet.

Beide Verfahrensschritte werden somit permanent gleichzeitig für vorzugsweise sämtliche Frequenzkanäle der Sprungsequenz durchgeführt.

In dem Verfahrensschritt a. kommt es also darauf an, eine Häufung von fehlerhaften Übertragungen in einem Frequenzkanal festzustellen. Dies kann auf verschiedene Arten erfolgen. Beispielsweise kann eine Störung eines Frequenzkanals dann festgestellt werden, wenn innerhalb einer Zeitspanne die Anzahl fehlerhafter Übertragungen die Anzahl fehlerfreier Übertragungen um einen vorgegebenen Schwellwert übersteigt. Dies kann praktisch so realisiert werden, indem für jeden Frequenzkanal ein Zähler implementiert wird und bei Feststellung einer fehlerhaften Übertragung der Zähler inkrementiert und bei Feststellung einer fehlerfreien Übertragung der Zähler dekrementiert wird, und die Störung des Frequenzkanals dann festgestellt wird, wenn der Zählerstand einen vorgegebenen Schwellwert übersteigt. Bei dieser Variante ist die genannte Zeitspanne somit nicht fest vorgegeben.

Die Feststellung einer Störung in einem Frequenzkanal kann jedoch auch auf andere Weise erfolgen. Beispielsweise kann von vornherein eine feste Zeitspanne vorgegeben werden und innerhalb dieser Zeitspanne können die fehlerhaften und die fehlerfreien Übertragungen gezählt werden und eine Störung festgestellt werden, wenn das Verhältnis der Anzahl der fehlerhaften Übertragungen zu den fehlerfreien Übertragungen einen bestimmten Schwellwert überschreitet.

Die Fehlerhaftigkeit der übertragenen Daten kann in an sich bekannter Weise dadurch festgestellt werden, indem senderseitig den Datenblöcken Prüf- oder Checksummen angehängt werden, die aus den Nutzdaten des Datenblocks berechnet werden. Im Empfänger wird die Berechnung der Prüfsumme nachvollzogen und falls diese nicht mit der an den Datenblock angehängten Prüfsumme übereinstimmt, ein Fehler festgestellt. Dies wird häufig mit zyklischen Redundanzüberprüfungen (CRC, Cyclic Redundancy Check) durchgeführt, wobei aus den Daten in jedem Datenblock ein redundanter Code erzeugt und für eine Fehlererfassung oder Korrektur dem Block hinzugefügt wird. In den meisten Fällen wird aus den Nutzdaten in einem Block unter Verwendung eines vorbestimmten Algorithmus ein CRC-Code als ein zyklischer redundanter Code hergeleitet. Die CRC-Codes werden durch Multiplikation einer Nutzdatensignalfolge mit einem sogenannten Generator-Polynom erzeugt. Nach dem Empfang des Code-Wortes wird dieses durch das Generator-Polynom geteilt. Falls das empfangene Code-Wort korrekt übertragen wurde, dann entsteht bei der Division kein Rest. Wenn umgekehrt bei der Division ein Rest ausgegeben wird, so wird festgestellt, dass die Übertragung fehlerhaft war.

Wie eingangs erwähnt, kann das Datenübertragungsverfahren ein Zeitschlitzverfahren (TDMA) beinhalten. Bei Verwendung dieses Verfahrens gibt es zumeist ein oder mehrere Zeitschlitze, die nicht benutzt werden. In diesem Fall kann im Verfahrensschritt b. die Stärke von Fremdsignalen während solcher unbenutzter Zeitschlitze gemessen werden.

Im Übrigen kann die im Verfahrensschritt b. zu erfolgende Messung als eine Feldstärkemessung, insbesondere als eine Messung nach dem an sich bekannten RSSI-Verfahren (Radio Signal Strength Indication) durchgeführt werden.

Falls zur Durchführung des Verfahrensschritts a. ein Zähler für jeden der Frequenzkanäle eingesetzt wird, so kann im Verfahrensschritt b. der Zähler nach einer während eines unbenutzten Zeitschlitzes erfolgten Messung dekrementiert werden, falls die gemessene Signalstärke der Störquelle einen vorgegebenen Schwellwert unterschreitet. Darüber hinaus kann vorgesehen sein, dass ein als gestört gekennzeichneter Frequenzkanal im Verfahrensschritt b. in die Frequenzsprung-Sequenz wieder eingefügt wird, sobald der Zählerstand den Wert Null erreicht. Weiterhin kann im Verfahrensschritt b. der Zähler auf seinen maximalen Zählerstand gesetzt werden, falls die gemessene Fremdsignalstärke einen vorgegebenen Schwellwert überschreitet.

Es kann vorgesehen sein, dass die eliminierten Frequenzkanäle in der Schaltungsanordnung eines Empfängers in einen Tabellenspeicher eingetragen werden. Jeder in dem Tabellenspeicher eingetragene Frequenzkanal kann an der Frequenzsprung-Sequenz nicht teilnehmen. Sobald der Störzustand beendet ist und der entsprechende Frequenzkanal aus dem Tabellenspeicher wieder gelöscht wird, kann er wieder Teil der Frequenzsprung-Sequenz werden.

Das erfindungsgemäße Verfahren kann insbesondere bei den Datenübertragungsverfahren Bluetooth, WDCT, DECT oder HomeRF eingesetzt werden.

Im Folgenden wird ein einziges Ausführungsbeispiel des erfindungsgemäßen Verfahrens näher erläutert.

In diesem Ausführungsbeispiel wird ein Bluetooth-System betrachtet, das zunächst alle 79 Frequenzen, die für den Bluetooth-Standard im 2,4 GHz ISM-Frequenzband vorgesehen sind, in seiner Frequenzsprung-Sequenz verwendet. Für jede Frequenz wird nun ein Zähler implementiert, der zunächst mit dem Wert Null vorbelegt wird. Tritt bei der Übertragung eines Datenpaketes ein Fehler auf, welches beispielsweise durch Empfang und Auswertung des CRC-Codes detektiert wird, so wird der Zähler für den entsprechenden Kanal inkrementiert, bei einer fehlerfreien Übertragung wird der Zähler dekrementiert. Überschreitet der Zählerwert eine festgelegte Grenze, so wird die entsprechende Frequenz aus der Sprungsequenz eliminiert. Auf diese Weise wird vermieden, dass einzelne Übertragungsfehler direkt den Kanal sperren. Erst eine dauerhafte Störung führt zur Elimination des entsprechenden Kanals.

In dem Bluetooth-System werden in der Regel nicht alle zur Verfügung stehenden Zeitschlitze zur Datenübertragung eingesetzt. In diesen unbenutzten Zeitschlitzen kann nun eine Feldstärkemessung des Frequenzbereichs des gesperrten Kanals durchgeführt werden. Liegt der Wert dieser Messung nun unterhalb einer bestimmten Grenze, so kann der entsprechende Zähler dekrementiert werden. Erreicht er den Wert Null, so kann der Kanal wieder freigegeben und in die Sprungsequenz eingefügt werden. Zeigt die Messung, dass auf dem Kanal noch Aktivität vorliegt, d.h. die Feldstärke noch oberhalb eines bestimmten anderen Schwellwertes liegt, wird der Zähler wieder auf den Maximalwert gesetzt. Auf diese Weise wird gewährleistet, dass kurze Pausen - wie sie häufig bei WLAN-Systemen auftreten - in dem störenden System nicht einen freien Kanal suggerieren. Nur bei einer festen Zahl von aufeinander liegenden Messungen kann davon ausgegangen werden, dass der Kanal wieder verfügbar ist und die entsprechende Frequenz wieder in die Sprungsequenz eingefügt werden kann.

## Patentansprüche

1. Verfahren zur Selektion von Frequenzkanälen in einem ein Frequenzsprungverfahren verwendenden Datenübertragungsverfahren, mit den Schritten:
a. Feststellen der Störung eines Frequenzkanals **durch** Detektieren mehrfacher fehlerhafter Übertragungen in dem Frequenzkanal und anschließendes Eliminieren des gestörten Frequenzkanals aus der Frequenzsprung-Sequenz,
b. Messen der Stärke von Fremdsignalen innerhalb des Frequenzbereichs eines eliminierten gestörten Frequenzkanals und Wiedereinfügen des Frequenzkanals in die Frequenzsprung-Sequenz, falls die Stärke einen vorgegebenen Schwellwert unterschreitet,
**dadurch gekennzeichnet, dass**
- in dem Verfahrensschritt a. eine Störung eines Frequenzkanals dann festgestellt wird, wenn innerhalb einer Zeitspanne die Anzahl fehlerhafter Übertragungen die Anzahl fehlerfreier Übertragungen um einen vorgegebenen Schwellwert übersteigt, wobei
- für jeden Frequenzkanal ein Zähler vorgesehen ist und bei fehlerhafter Übertragung der Zähler inkrementiert und bei fehlerfreier Übertragung der Zähler dekrementiert wird,
- die Störung des Frequenzkanals dann festgestellt wird, wenn der Zählerstand einen vorgegebenen Schwellwert übersteigt,
- die Datenübertragung mittels eines Zeitschlitzverfahrens durchgeführt wird, und im Verfahrensschritt b. die Fremdsignalstärke in unbenutzten Zeitschlitzen gemessen wird,
- im Verfahrensschritt b. der Zähler nach einer in einem unbenutzten Zeitschlitz erfolgten Messung dekrementiert wird, falls die gemessene Fremdsignalstärke einen vorgegebenen Schwellwert unterschreitet.

2. Verfahren nach Anspruch 1,
**dadurch gekennzeichnet, dass**
- die Fehlerhaftigkeit der übertragenen Daten mittels Prüf- oder Check-Summen erkannt wird, welche den blockweise gesendeten Daten senderseitig beigefügt werden.

3. Verfahren nach Anspruch 2,
**dadurch gekennzeichnet, dass**
- jedem Datenblock senderseitig ein CRC-Code, Cyclic Redundancy Check, hinzugefügt wird.

4. Verfahren nach einem der vorhergehenden Ansprüche,
**dadurch gekennzeichnet, dass**
- die Messung im Verfahrensschritt b. eine Feldstärkemessung, insbesondere eine Messung nach dem RSSI-Verfahren, Radio Signal Strength Indication, ist.

5. Verfahren nach einem der vorhergehenden Ansprüche,
**dadurch gekennzeichnet, dass**
- der Frequenzkanal in die Frequenzsprung-Sequenz wieder eingefügt wird, sobald der Zählerstand den Wert Null erreicht.

6. Verfahren nach einem der vorhergehenden Ansprüche,
**dadurch gekennzeichnet, dass**
- im Verfahrensschritt b. der Zähler auf seinen maximalen Zählerstand gesetzt wird, falls die gemessene Fremdsignalstärke einen vorgegebenen Schwellwert überschreitet.

7. Verfahren zur Datenübertragung zwischen mindestens zwei Stationen über Funkstrecken unter Verwendung eines Frequenzsprungverfahrens und eines Frequenzkanal-Selektionsverfahrens nach einem der vorhergehenden Ansprüche.

8. Verfahren nach Anspruch 7, welches auf einem der Übertragungs-Standards Bluetooth, WDCT, DECT oder HomeRF basiert.

## Claims

1. Method for selecting frequency channels in a data transmission method which uses a frequency hopping method, with the following steps:
a. the interference in a frequency channel is determined by detecting multiple erroneous transmissions in the frequency channel, and the frequency channel with interference is then eliminated from the frequency hopping sequence,
b. the strength of external signals is measured within the frequency range of an eliminated frequency channel with interference, and the frequency channel is reinserted into the frequency hopping sequence if the strength is below a prescribed threshold value,
**characterized in that**
- in method step a. interference in a frequency channel is determined if the number of erroneous transmissions exceeds the number of error-free transmissions by a prescribed threshold value within a period of time, wherein
- each frequency channel has a counter, and the counter is incremented upon erroneous transmission and the counter is decremented upon error-free transmission,
- the interference in the frequency channel is determined if the count exceeds a prescribed threshold value,
- the data transmission is performed using a timeslot method, and in method step b. the external signal strength is measured in unused timeslots,
- in method step b. the counter is decremented on the basis of a measurement taken in an unused timeslot if the measured external signal strength is below a prescribed threshold value.

2. Method according to Claim 1,
**characterized in that**
- the erroneous nature of the transmitted data is identified using checksums which are added to the block-transmitted data at the transmitter end.

3. Method according to Claim 2,
**characterized in that**
- each data block has a CRC, Cyclic Redundancy Check, code added to it at the transmitter end.

4. Method according to one of the preceding claims,
**characterized in that**
- the measurement in method step b. is a field strength measurement, particularly a measurement based on the RSSI, Radio Signal Strength Indication, method.

5. Method according to one of the preceding claims,
**characterized in that**
- the frequency channel is reinserted into the frequency hopping sequence as soon as the count reaches the value zero.

6. Method according to one of the preceding claims,
**characterized in that**
- in method step b. the counter is set to its maximum count if the measured external signal strength exceeds a prescribed threshold value.

7. Method for data transmission between at least two stations via radio links using a frequency hopping method and a frequency channel selection method according to one of the preceding claims.

8. Method according to Claim 7 which is based on one of the transmission standards Bluetooth, WDCT, DECT or HomeRF.

## Revendications

1. Procédé de sélection de canaux de fréquence dans un procédé de transmission de données utilisant un procédé à saut de fréquence, comprenant les stades dans lesquels :
a) on constate la perturbation d'un canal de fréquence en détectant des transmissions défectueuses plusieurs fois dans le canal de fréquence et en éliminant ensuite le canal de fréquence perturbé de la séquence à saut de fréquence,
b) on mesure l'intensité de signaux étrangers dans le domaine de fréquence d'un canal de fréquence éliminé et perturbé et on réinsère le canal de fréquence dans la séquence à saut de fréquence si l'intensité est inférieure à un seuil prescrit,
**caractérisé en ce que**
- dans le stade a) du procédé, on constate une perturbation d'un canal de fréquence si, dans un laps de temps, le nombre de transmissions défectueuses dépasse le nombre de transmissions non défectueuses d'une valeur de seuil prescrite, dans lequel
- il est prévu, pour chaque canal de fréquence, un compteur et, lors d'une transmission défectueuse, le compteur est incrémenté et lors d'une transmission non défectueuse le compteur est décrémenté,
- on constate la perturbation du canal de fréquence si l'état du compteur dépasse une valeur de seuil prescrite,
- on effectue la transmission de données au moyen d'un procédé à créneau temporel et au stade b) du procédé on mesure l'intensité des signaux étrangers dans des créneaux temporels inutilisés,
- au stade b) du procédé on décrémente le compteur après une mesure effectuée dans un créneau temporel inutilisé si l'intensité mesurée du signal étranger est inférieure à un seuil prescrit.

2. Procédé suivant la revendication 1, **caractérisé en ce que**
- on détecte le fait que les données transmises sont défectueuses au moyen de sommes de vérification ou de contrôle, qui sont ajoutées côté émetteur aux données émises par bloc.

3. Procédé suivant la revendication 2, **caractérisé en ce que**
- on ajoute à chaque bloc de données du côté émetteur un code CRC, Cyclic Redundancy Check.

4. Procédé suivant l'un des revendications précédentes, **caractérisé en ce que**
- la mesure au stade b) du procédé est une mesure d'intensité de champ, notamment une mesure suivant le procédé RSSI, Radio Signal Strength Indication.

5. Procédé suivant l'un des revendications précédentes, **caractérisé en ce que**
- on réintroduit le canal de fréquence dans la séquence à saut de fréquence dès que l'état du compteur atteint la valeur "0".

6. Procédé suivant l'une des revendications précédentes, **caractérisé en ce que**
- au stade b) du procédé on met le compteur a son état de compteur maximum si l'intensité mesurée du signal étranger dépasse un seuil prescrit.

7. Procédé de transmission de données entre au moins deux stations par des liaisons radioélectriques en utilisant un procédé à saut de fréquence et un procédé de sélection de canal de fréquence, suivant l'une des revendications précédentes.

8. Procédé suivant la revendication 7, qui repose sur l'une des normes de transmission Bluetooth, WDCT, DECT ou HomeRF.
